# EUROPÄISCHE PATENTSCHRIFT

(11) **EP 1 332 056 B1**
(45) Veröffentlichungstag und Bekanntmachung des Hinweises auf die Patenterteilung: **02.08.2006**
(21) Anmeldenummer: 01993552.7
(22) Anmeldetag: 11.10.2001
(51) Int. Cl.: B60J 1/20, B60R 21/06

(54) **FENSTERROLLO ODER TRENNGITTER MIT ZWEI WINKELGETRIEBEN**
WINDOW SHADE OR SCREEN COMPRISING TWO ANGULAR GEARING MECHANISMS
STORE DE FENETRE OU GRILLE DE SEPARATION COMPORTANT DEUX ENGRENAGES ANGULAIRES

(30) Priorität: 10.11.2000 DE 10055949
(43) Veröffentlichungstag der Anmeldung: 06.08.2003
(73) Patentinhaber: BOS GmbH & Co. KG, 73760 Ostfildern (DE)
(72) Erfinder: SEEL, Holger, 71134 Aidlingen (DE)
(74) Vertreter: Rüger, Barthelt & Abel Patentanwälte
(86) Internationale Anmeldenummer: PCT/DE2001/003909
(87) Internationale Veröffentlichungsnummer: WO 2002/038404

(56) Entgegenhaltungen:
- EP-A- 0 240 747
- EP-A- 0 953 464
- DE-A- 10 025 401
- US-A- 5 653 278

## Beschreibung

Aus der EP 0 240 747 ist ein gattungsgemäßes Heckscheibenrollo bekannt, das führungslos arbeitet. Die federvorgespannte Wickelwelle ist bei dem bekannten Heckscheibenrollo in einem Gehäuse auf oder unter der Hutablage drehbar gelagert. An der Wickelwelle ist mit einer Kante die Rollobahn angebracht, deren andere, dazu parallel verlaufende Kante mit einer Zugstange verbunden ist. Die Zugstange steift gleichzeitig die betreffende Kante der Rollobahn aus.

Um die Rollobahn aufzuspannen und im aufgespannten Zustand zu halten, sind in der Wickelwelle zwei Schwenkhebel gelagert.

Das freie Ende der beiden starren Schwenkhebel greift gleitend in den Zugstab ein. Durch gegensinniges Verschwenken der Schwenkhebel wird die Rollobahn gegen die Wirkung der Feder von der Wickelwelle abgezogen und aufgespannt. Gleichzeitig tragen die Schwenkhebel in jeder Betriebsstellung diese Kante der Rollobahn und halten die Rollobahn im Zusammenwirken mit der federvorgespannten Wickelwelle aufgespannt.

Das Verschwenken der Hebel geschieht über ein Kurbelgetriebe. Zu diesem Zweck sind die Hebel über die Schwenkachse hinaus verlängert. Die Verlängerung dient als Kurbel, an der eine Zugstange angreift. Das andere Ende jeder der beiden Zugstangen ist ebenfalls mit einer Kurbel verbunden, die drehfest mit Ausgangswelle eines Getriebes sind.

Bei dieser Anordnung muss der Getriebemotor ungefähr mittig zwischen den beiden Schwenkhebel sitzen. Hierdurch und in Verbindung mit den Kurbelarmen ergibt sich ein nicht unerheblicher Platzbedarf, der obendrein an einer ungünstigen Stelle im Fahrzeug auftritt, nämlich in der Mitte des Kofferraums unter der Hutablage.

Ausgehend hiervon ist es Aufgabe der Erfindung, ein Heckscheibenrollo bzw. ein Trenngitter zu schaffen, bei dem die Betätigungselemente ohne Kurbeln angetrieben sind.

Diese Aufgabe wird erfindungsgemäß durch die Vorrichtung mit den Merkmalen des Anspruches 1 gelöst.

Bei der erfindungsgemäßen Vorrichtung, gleichgültig ob sie als Heckscheibenrollo oder Trenngitter ausgeführt ist, sind die beiden Betätigungselemente einends auf der Ausgangswelle eines Winkelgetriebes gelagert. Das Winkelgetriebe kann geringere Abmessungen aufweisen als die Kurbeln, wodurch eine erheblich Platzersparnis zustande kommt. Die Eingangswellen der Winkelgetriebe liegen parallel zur Achse der Wickelwelle und können leicht über eine Welle, beispielsweise auch eine biegsame Welle, miteinander gekuppelt werden.

Die andere Möglichkeit besteht darin, jedes Getriebe mit einem eigenen Motor zu versehen. Dabei ist eine spezielle Synchronisation der Motoren nicht erforderlich. Es genügt, wenn beide Motoren zum Ein- und Ausfahren gleichzeitig mit der entsprechenden Polarität mit Strom beaufschlagt werden. Der Gleichlauf, den permanenterregte Gleichstrommotoren zeigen, reicht im vorliegenden Fall vollkommen aus, um ein Schiefziehen zu vermeiden.

Die Verwendung von zwei Motoren, d.h. einem Elektromotor je Winkelgetriebe, gestattet es außerdem, Motoren mit kleinerer Leistung und entsprechend kleinem Durchmesser zu verwenden, was wiederum erheblich zur Platzersparnis beiträgt. Darüber hinaus kann der Motor auch abgesetzt untergebracht werden.

Eine einfache und sehr platzsparende Form des Winkelgetriebes besteht in der Verwendung eines Schneckengetriebes. Das Schneckengetriebe hat außerdem den Vorteil, bei kleinem Bauraum ein verhältnismäßig hohes Drehmoment übertragen zu können und die selbsthaltende Wirkung des Motors zu unterstützen.

Als Betätigungselemente können einarmige Hebel verwendet werden oder auch Kniehebel, je nachdem was für den speziellen Anwendungszweck günstiger ist.

Im übrigen sind Weiterbildungen der Erfindung Gegenstand von Unteransprüchen. Dabei werden auch solche Kombinationen ausdrücklich mit beansprucht, für die es kein spezielles Ausführungsbeispiel gibt.

In den Figuren sind Ausführungsbeispiele der Erfindung dargestellt. Es zeigen:
- Fig. 1: ein Kraftfahrzeug in einer perspektivischen Rückansicht unter Veranschaulichung des erfindungsgemäßen Heckscheibenrollos,
- Fig. 2: das Heckscheibenrollo nach Figur 1 in einer perspektivischen Detailansicht,
- Fig. 3: ein Heckscheibenrollo mit lediglich einem Antriebsmotor und einer Kuppelwelle,
- Fig. 4: ein Heckscheibenrollo ähnlich dem nach Figur 2, unter Verwendung von Kniehebeln, und
- Fig. 5: einen Kombi-Pkw mit einem Trenngitter, in einer perspektivischen Darstellung.

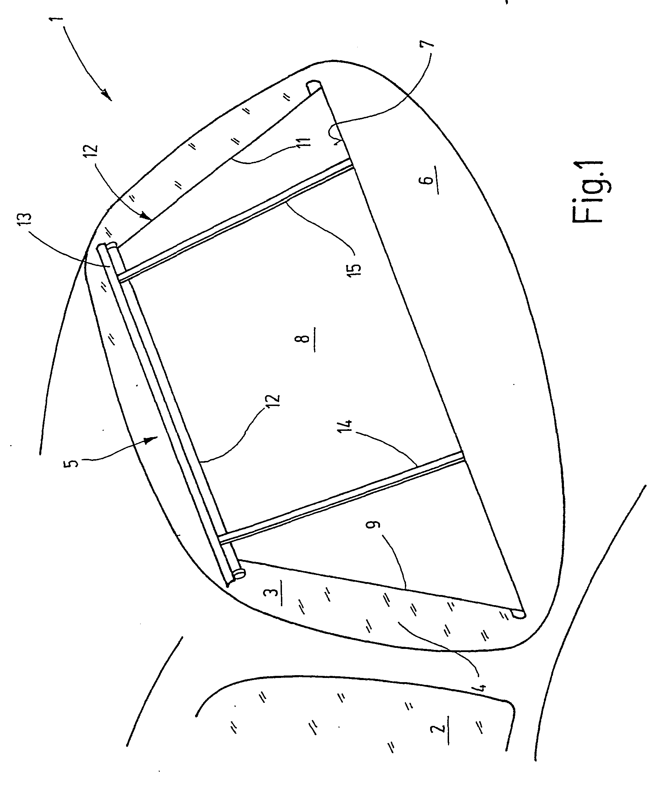

Figur 1 zeigt in einer stark schematisierten Weise eine Heckpartie eines Personenkraftfahrzeuges 1 in einer Ansicht von hinten. In der perspektivischen Darstellung ist ein linkes hinteres Seitenfenster 2 sowie ein Heckfenster 3 mit einer eingesetzten üblicherweise gekrümmten Fensterscheibe 4 zu erkennen.

Vor der Innenseite der Fensterscheibe 4 befindet sich ein Fensterrollo 5, das im ausgefahrenen Zustand gezeigt ist.

Ferner ist in Figur 1 eine Hutablage 6 zu erkennen, die einen über nahezu die gesamte Breite verlaufenden Auslaufschlitz 7 enthält. Die Hutablage 6 erstreckt sich von der Unterkante des Heckfensters 4 bis zu der Rückseite einer nicht erkennbaren Rücksitzlehne.

Gemäß Figur 1 gehört zu dem Fensterrollo 5 eine aus einem mehr oder weniger lichtdurchlässigen flächenförmigen Material bestehende Rollobahn 8, die einen etwa trapezförmigen Zuschnitt aufweist und von zwei Längskanten 9 und 11 begrenzt ist. An einer weiteren quer zu den Längskanten 9 und 11 verlaufenden Querkante 12 ist ein Zugstab 13 befestigt. Der Zugstab 13 ist mit einer nach unten offenen Führungsnut versehen, in die mit ihren freien Enden zwei gegensinnig schwenkbare Schwenkhebel 14 und 15 eingreifen. Die Schwenkhebel 14 und 15 bewegen sich beim Ein- und Ausfahren des Heckfensterrollos 5 zusammen mit der Rollobahn 8 aus dem Tuchschlitz 7 heraus beziehungsweise in diesen hinein.

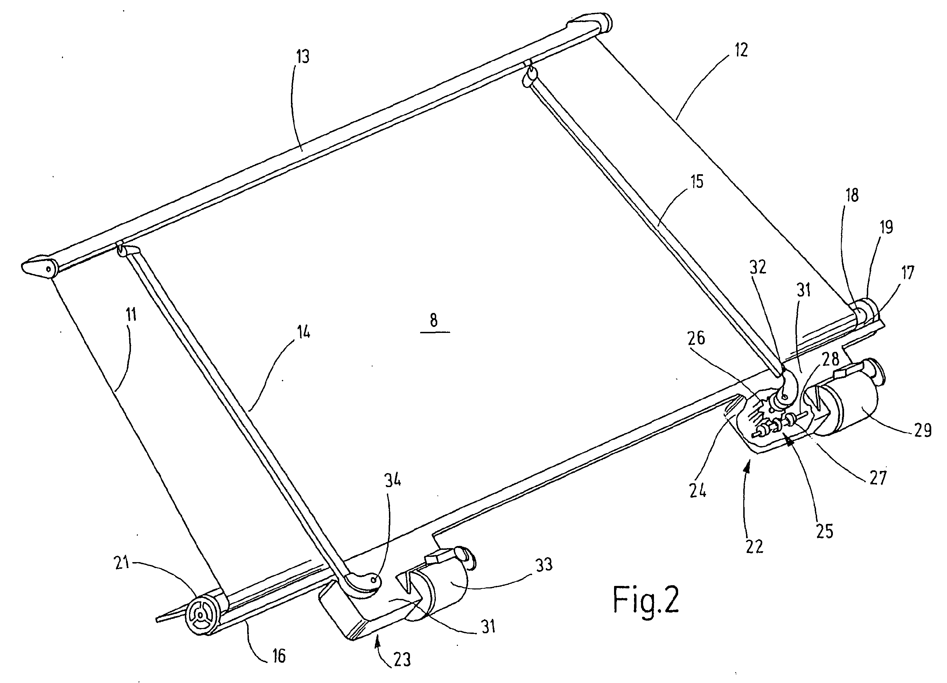

Der Detailaufbau des Heckfensterrollos 5 ist in Figur 2 veranschaulicht.

Das Heckfensterrollo 5 weist einen Rahmen oder Sockel 16 auf, der eine durchgehende Längsnut 17 enthält, in der eine Wickelwelle 18 drehbargelagert ist. Hierzu ist der Sockel 16 an den Enden der Nut 17 mit Lagerstücken 19 und 21 versehen.

An der Wickelwelle 18 ist mit einer, zu der Querkante 12 parallel verlaufenden Kante, die Rollobahn 8 befestigt. Mittels einer nicht weiter veranschaulichten Schraubenfeder, die im Inneren der rohrförmigen Wickewelle 18 untergebracht ist, wird die Wickelwelle 18 im Sinne des Aufwickelns der Rollobahn 8 auf die Wickelwelle 18 vorgespannt.

Seitlich neben der Wickelwelle 18, sind an dem Sockel 16 zwei Winkelgetriebe 22 und 23 befestigt.

Das Winkelgetriebe 22 weist ein Getriebegehäuse 24 auf, in dessen Inneren sich ein Schneckengetriebe 25 befindet. Das Schneckengetriebe 25 setzt sich aus einem Schneckenrad 26 und einer Schnecke 27 zusammen. Die Drehachse des Schneckenrades 26, das in dem Getriebegehäuse 24 drehbar gelagert ist, verläuft rechtwinklig zu der Achse der Wickelwelle 18, während die Schnecke 27 zu der Wickelwelle 18 parallel liegt.

Die Lagerteile beziehungsweise Lagerbohrungen für die Schnecke 27 und das Schneckenrad 26 sind nicht im einzelnen gezeigt, da Sie für das Verständnis der Erfindung nicht wesentlich sind und der Fachmann weiß, wie man derartige Getriebeteile lagert.

Die Schnecke 27 ist drehfest mit einer Welle 28 verbunden, die gleichzeitig die Ankerwelle eines permanent erregten Gleichstrommotors 29 darstellt.

Das Schneckenrad 26 sitzt drehfest auf einer Ausgangswelle 32, die zu der in Figur 2 erkennbaren Vorderseite 31 des Getriebegehäuses 24 herausgeführt ist. Sie trägt drehfest und biegefest den Schwenkarm 15, der hierzu mit einer entsprechenden Aufnahmebohrung versehen ist. Die Ausgangswelle 32 des Schneckenrades 26 bildet somit auch die Schwenkachse für den Hebel 15 und sie steht senkrecht auf einer Ebene, die von der aufgespannten Rollobahn 8 definiert ist.

Das Winkelgetriebe 23 ist in der gleichen Weise aufgebaut, wie das Winkelgetriebe 22 und ebenfalls mit einem eigenen Antriebsmotor 33 versehen.

Durch die Vorderseite 31 des Winkelgetriebes 23 ragt wiederum die betreffende Schneckenradachse oder -welle 34 hervor, auf der drehfest der Schwenkhebel 14 befestigt ist. Die beiden Schwenkhebel 14 und 15 sind wie gezeigt gegensinnig abgekröpft, damit sie im eingefahrenen Zustand eine parallele Lage unterhalb des Schlitzes 7 einnehmen.

Die Abkröpfung der beiden Schwenkhebel 14 und 15 ist ebenfalls wie aus der Figur ersichtlich, gegensinnig.

Die Schwenkarme 14, 15 sind biegesteif und dazu eingerichtet, die Rollobahn 8 aufgespannt zu halten. Das Reaktionsmoment hierfür muss durch die Achsen 32, 34 aufgebracht werden, weshalb diese entsprechend kräftig ausgeführt und gelagert sein müssen, damit sie in der Lage sind, das im ausgefahrenen Zustand aufgetretene Biegemoment an den beiden Schwenkarmen 14, 15 auszuhalten ohne beschädigt zu werden.

Der Vorteil dieser Anordnung besteht darin, dass das Schneckenrad 26 in radialer Richtung weniger Platz beansprucht als die Kurbelanordnung bei dem bekannten Heckscheibenrollo. Darüber hinaus wird die Antriebsleistung auf zwei Motoren aufgeteilt, womit jeder Motor für sich im Durchmesser etwas kleiner gewählt werden kann, da er nur die Hälfte der Antriebsleistung aufzubringen hat, verglichen mit der Einmotorvariante, wie sie beim Stand der Technik verwendet wird.

Die beiden Motoren 29 und 33 sind gemeinsam in bekannter Weise an einen entsprechenden Steuerschalter oder Steuereinrichtung für das Heckfensterrollo 5 angeschlossen. Sie werden gleichzeitig in Gang gesetzt und gleichzeitig abgeschaltet. Eine besondere Synchronisation zwischen den beiden Motoren 29 und 33 findet während des Laufs nicht statt. Die einzige Synchronisation die erfolgt besteht darin, dass beide Motoren 29 und 33 jeweils in der Endlage mechanisch blockiert sind, weil der Schwenkarm 14 bzw. 15 gegen einen entsprechenden Endanschlag anstößt.

Die Funktionsweise des gezeigten Rollos 5 ist wie folgt:

Im eingefahrenen Zustand ist die Rollobahn 8 unter der Wirkung der Schraubenfeder im Inneren der Wickelwelle 18 auf die Wickelwelle aufgewickelt. Die Schraubenfeder dient als Federmotor. Im eingefahrenen Zustand liegt die Zugstange 13 auf den Rändern des Schlitzes 7 auf und deckt diesen weitgehend ab. Die beiden Arme 14 und 15 sind in eine Lage geschwenkt in der sie parallel zu der Wickelwelle 18 liegen.

Entsprechend dem Verhältnis des Abstandes zwischen den Achsen 32 und 34 und der Länge der Schwenkhebel 14 und 15 kann es zweckmäßig sein, in der Zugstange 13 entweder eine gemeinsame Führungsnut oder zwei parallele Führungsnuten zu verwenden. Eine einzelne Führungsnut kommt in Frage, wenn der Abstand zwischen den beiden Achsen 33 und 34 gröβer ist, als die Summe der Länge der beiden Schwenkhebel 14 und 15. Wenn diese Summe jedoch größer ist als der Abstand, würden die Schwenkhebel 14 und 15 in einer gemeinsamen Nut bei der Bewegung aneinander stoßen, so dass es zweckmäßig ist, für jeden der beiden Hebel 14 und 15 eine eigene Nut zu verwenden.

In der eingefahrenen Stellung stoßen außerdem die beiden Schwenkarme 14 und 15 an ortsfeste Anschläge, die an dem Sockel 16 vorgesehen sein können, an, und zwar noch bevor sie aus der betreffenden Führungsnut des Zugstabs 13 freikommen können.

Eine andere Möglichkeit des mechanischen Anschlags besteht darin eine hinterschnittene Nut für die Hebel 14 oder 15 zu verwenden, damit mit der Schwenkkraft der Schwenkarme 14, 15 die Zugstange 13 gegen den Auslaufschlitz gezogen wird. In diesem Falle wird der betreffende mechanische Anschlag durch die mechanische Anlage der Zugstange auf den Rändern des Auslaufschlitzes 17 gebildet.

Wenn ausgehend von dieser Position das Heckscheibenrollo 5 ausgefahren werden soll, wird für beide Motoren 29 und 33 gleichzeitig der Strom mit der entsprechenden Polarität eingeschaltet. Da die Motoren mit geringer Streuung praktisch gleich schnell laufen, setzen sie mit nahezu derselben Geschwindigkeit über die Schnecke 27 das Schneckenrad 26 in Bewegung, so dass die zugehörige Ausgangswelle 32 bzw. 34 entsprechend gedreht wird. Wegen der drehfesten Verbindung der beiden Schwenkarme 14, 15 mit der dazugehörigen Welle 32, 34 werden die Schwenkarme 14, 15 aus der Stellung in der sie etwa parallel zu der Wickelwelle 14 liegen in die aufgerichtete Stellung gemäß Figur 2 überführt. In der aufgerichteten Stellung verlaufen die beiden Schwenkhebel 14, 15 etwa rechtwinklig zu der Wickewelle 18. Um diese Stellung einzunehmen, durchlaufen beide Schwenkhebel 14 und 15 im entgegengesetzten Drehsinn praktisch denselben Winkelbereich und erreichen deswegen angenähert nach der selben Zeit die ausgefahrene Stellung. Da der Motorstrom noch eine längere Zeit eingeschaltet bleibt, wird sichergestellt, dass jeder Schwenkarme 14, 15 tatsächlich seine Endlage erreicht, die durch entsprechende Anschläge vorgegeben ist. Die Anschläge sind in der Figur nicht weiter dargestellt. Es kann sich bei ihnen um einfache Zapfen handeln, die an dem Sockel 16 vorgesehen sind.

Bei dem gezeigten Ausführungsbeispiel sind die beiden Winkelgetriebe 22 und 23 so von einander beabstandet, dass im ausgefahrenen Zustand die Schwenkarme 14, 15 parallel zueinander verlaufen, wenn sie in der Endlage stehen. Falls es als störend empfunden wird, wenn die Schwenkarme 14, 15 im ausgefahrenen Zustand über die Fläche der Rollobahn 8 verlaufen, können die Getriebe 22 und 23 auch nach außen versetzt werden. In diesem Falle würden die Schwenkhebel 14, 15 im ausgefahrenen Zustand parallel zu den seitlichen Rändern 9 und 11 liegen und nicht weiter störend in Erscheinung treten.

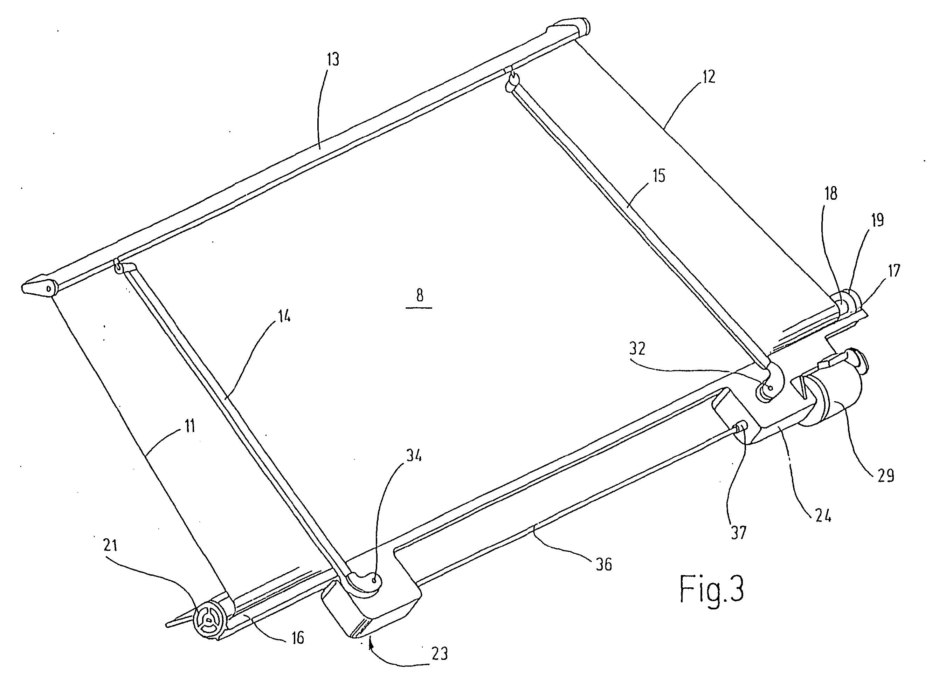

Eine andere recht platzsparende Ausführungsform ist in Figur 3 gezeigt. Bei dieser Ausführungsform wird der zweite Motor 33 durch eine Kuppelwelle 36 ersetzt. Bauelemente dieses Heckscheibenrollos 5, die bereits im Zusammenhang mit Figur 2 beschrieben sind, werden mit denselben Bezugszeichen belegt und es wird auf eine erneute Beschreibung verzichtet.

Die Kuppelwelle 36 ist einends mit einem aus dem Getriebegehäuse 24 vorstehenden Achsstummel (Abtriebsende) 37 der Schneckenwelle 28 drehfest verbunden. Das andere Ende der Kuppelwelle 36 ist drehfest mit der Schneckenwelle des Winkelgetriebes 23 verbunden.

Auch diese Anordnung ist verhältnismäßig platzgünstig, obwohl ein Motor die gesamte Antriebsleistung aufbringen muss. Der Grund hierfür besteht in der Möglichkeit, den Antriebsmotor zu einem Ende des Sockels 16 hin zu verlagern, womit er sich im eingebauten Zustand in einem Bereich des Kofferraums befindet, in dem er weniger störend nach unten in das Lichtraumprofil des Kofferraums hineinragt.

Es versteht sich, dass bei der Ausführungsform nach Figur 3 die beiden Winkelgetriebe 22, 23 mit Schnecken ausgerüstet sind, die einen entgegengesetzten Drehsinn aufweisen, um die gegensinnige Verschwenkung der beiden Schwenkarme 14, 15 zu erzielen, was bei dem Ausführungsbeispiel nach Figur 2 durch die entgegengesetzte Polarität der Motoren 29 und 33 bewerkstelligt wird.

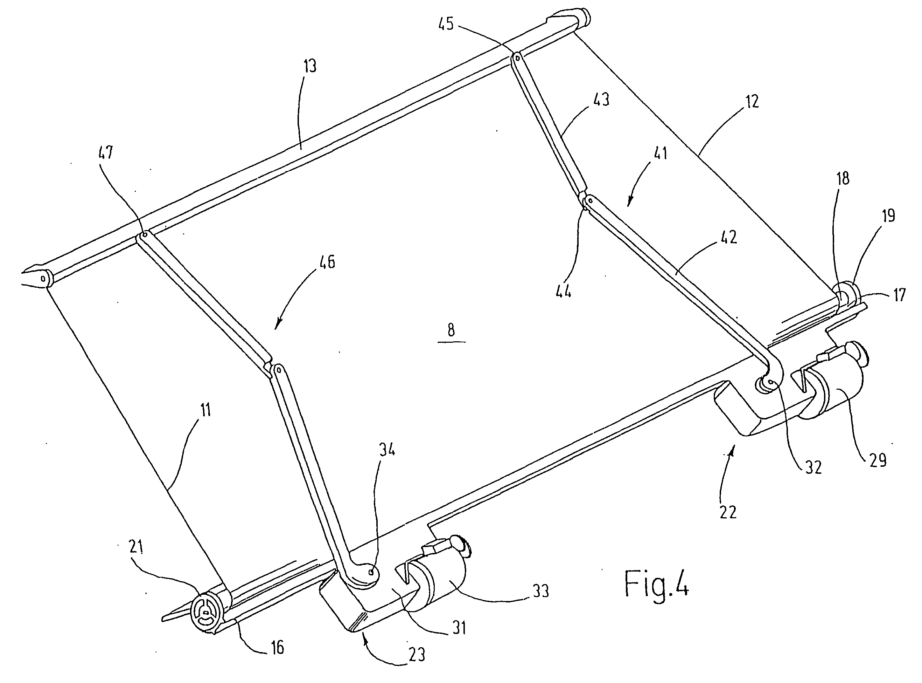

Figur 4 zeigt ein Ausführungsbeispiel, das sich von dem Ausführungsbeispiel nach Figur 2 hinsichtlich der Betätigungselemente für die Rollobahn 8 unterscheidet. Soweit bei diesem Heckscheibenrollo 5 Bauelemente auftreten, die bereits im Zusammenhang mit Figur 2 beschrieben sind, werden die selben Bezugszeichen verwendet, und es wird auf eine erneute Beschreibung verzichtet.

Bei dem Ausführungsbeispiel nach Figur 4 ist mit der Ausgangswelle 32 ein Kniehebel 41 gekoppelt, der sich aus zwei Kniehebelarmen 42 und 43 zusammensetzt. Die beiden Kniehebelarme 42 und 43 sind durch ein Kniehebelgelenk 44 miteinander verbunden. Beide Kniehebelarme 42 und 43 haben dieselbe effektive Länge. Der Kniehebelarm 42 sitzt einends drehfest auf der Ausgangswelle 32 und führt von dort zu dem Kniehebelscharniergelenk 44, dessen Scharnierachse parallel zu der Achse 32 liegt. Der zweite Kniehebelarm 43 verbindet das Kniehebelscharniergelenk 44 mit einer Anlenkstelle 45 an der Zugstange 13. Die Achse dieses Gelenkes 45 ist wiederum parallel zu der Achse 32.

Der Schwenkarm 14 des Ausführungsbeispiels nach Figur 2 ist ebenfalls durch einen Kniehebel, den Kniehebel 46, ersetzt, dessen Aufbau genauso aussieht wie der Aufbau des Kniehebels 42, weshalb auf eine erneute Beschreibung verzichtet ist. Der Kniehebel 46 ist einends drehfest, mit der Welle 34 verbunden, während er anderenends an einer Anlenkstelle 47 mit der Zugstange 13 schwenkbar gekuppelt ist.

Die Achsen der Anlenkstellen 45, 47 und die Wellen 32, 34 liegen in den Eckpunkten eines Rechtecks.

Bei der Betätigung falten die beiden Kniehebel 41 und 46 ein, wobei sich die Kniehebelscharniergelenke 44 aufeinander zu bewegen.

Der Antrieb für die beiden Kniehebel 41 und 46 kann gemäß Figur 2 oder Figur 3 ausgeführt sein.

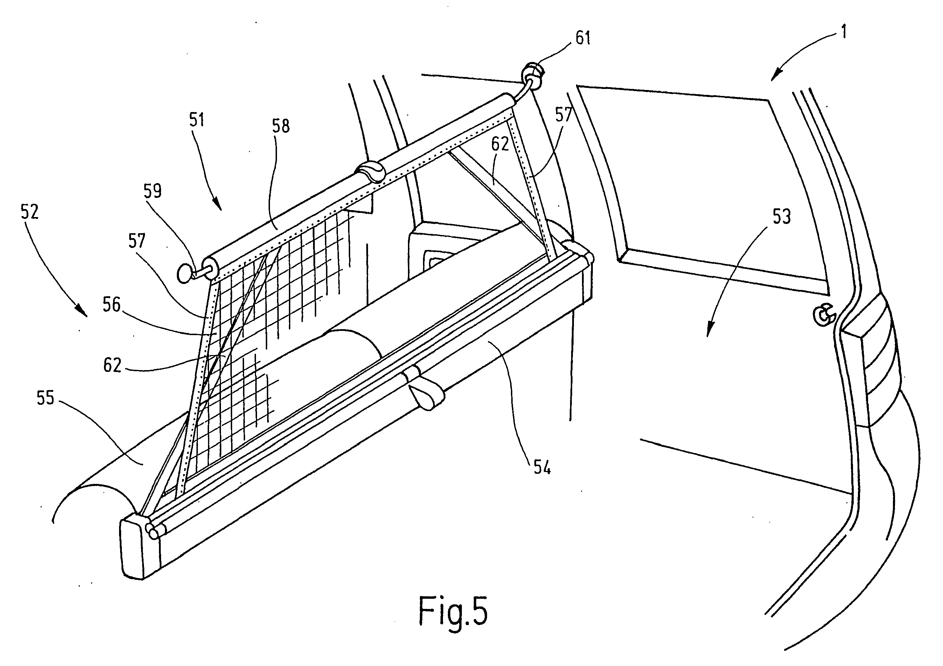

Das erfindungsgemäße Antriebskonzept, wie es in Verbindung mit dem Heckscheibenrollo 5 gezeigt ist, kann auch für das elektrische Aus- und Einfahren von Trenngittern 51 verwendet werden, wie sie in Figur 5 beispielhaft gezeigt sind. Das Trenngitter 51 dient dazu, einen Fahrgastraum 52 von einem Laderaum 53 eines Kombi-Pkw 1 abzutrennen.

Das Trenngitter 51 weist ein längliches Gehäuse 54 auf, dass auf der Rückseite einer Sitzlehne 55 befestigt ist und sich über die gesamte Fahrzeugbreite erstreckt. Im Inneren des Gehäuses 54 ist eine Wickelwelle drehbar gelagert, ähnlich der Wickelwelle 18 des Heckscheibenrollos 5. An dieser Wickelwelle ist ein gewirktes Gitternetz 56 befestigt. Das Gitternetz 56 besteht aus Kunststofffäden, die zu einer Kettenwirkware verarbeitet sind. Das Gitternetz 56 hat einen etwa trapezförmigen Zuschnitt. Die seitlichen Ränder sind durch Einfassbänder 57 gesichert.

An einer von der Wickelwelle beziehungsweise dem Gehäuse 54 abliegende Kante ist an dem Gitternetz 56 eine Zugstange 58 befestigt, die endseitig mit Einhängemitteln 59 versehen ist. Die Einhängemittel 59 sind zum Einhängen in fahrzeugfeste Aufnahmetaschen 61 vorgesehen.

Um das Gitternetz 56 aufzuspannen sind zwei gegensinnig schwenkbare Hebel 62 vorgesehen, die in der gleichen Weise angelenkt und betätigt werden wie die Schwenkarme 14 und 15 bei dem Ausführungsbeispiel für das Heckscheibenrollo 5. Es erübrigt sich deswegen eine erneute Wiedergabe von Figur 2 oder 3, wobei der einzige Unterschied darin bestehen würde, dass die Schwenkhebel das Bezugszeichen 62 tragen würden und die Rollobahn 8 von dem Gitternetz 56 gebildet wäre.

Ein Fensterrollo 5 oder ein Trenngitter 51 wird mit Hilfe von Betätigungselementen 14, 15, 41, 46, 62 ausgefahren, wobei die Betätigungselemente 14, 15, 41, 46, 62 um eine Achse schwenken, die rechtwinklig zu der Wickelwelle 18 liegt, auf der die zugehörigen Bahnen 8, 56 aufgewickelt sind. Die Betätigungselemente 14, 15, 41, 46, 62 sind biegesteif bezüglich einer Biegeebene, die senkrecht auf der durch die aufgespannte Rollobahn 8, 56 oder das Trennnetz definierte Ebenen steht.

Für jedes der Betätigungselemente 14, 15, 41, 46, 62 ist ein Winkelgetriebe 22, 23 vorgesehen, dessen Ausgangswelle drehfest das betreffende Betätigungselement 14, 15, 41, 46, 62 trägt. Die Ausgangswelle 32, 34 des betreffenden Winkelgetriebes 22, 23 bildet gleichzeitig die Achse zum Lagern des Betätigungselomentes 14, 15, 41, 46, 62.

Die beiden Winkelgetriebe 22, 23 werden entweder über getrennte Motoren 29, 33 angetrieben oder ihre Eingangwellen sind mechanisch miteinander gekuppelt und werden gemeinsam durch einen Elektromotor 29 in Gang gesetzt.

## Patentansprüche

1. Fensterrollo oder Trenngitter (5;51),
mit einer drehbar gelagerten Wickelwelle (18),
mit einer Bahn (8;56), die mit einer Kante an der Wickewelle (18) befestigt ist und deren andere Kante mit einem Zugstab (13;58) ausgesteift ist, **gekennzeichnet durch**
zwei Winkelgetriebe (22,23), die in der Nähe der Wickewelle (18) angeordnet sind und von denen jedes eine Eingangswelle (28) und eine Ausgangswelle (32,34) aufweist, wobei die Eingangswellen (28) parallel zu der Wickelwelle (18) und die Ausgangswellen (32,34) rechtwinkelig zu der Wickelwelle (18) ausgerichtet sind,
zwei Betätigungselemente (14,15;41,46;62), die mit dem Zugstab (13;58) endseitig verbunden sind, von denen das eine (14;46;62) an der einen (34) der beiden Ausgangswellen (32,34) und das andere (15;41;62) an der anderen (32) der beiden Ausgangswellen (32,34) drehfest und biegefest angebracht ist und die dazu dienen, die Bahn (8;56) von der Wickewelle (18) abzuziehen und zumindest über ein Stück des Auszugsweges aufgespannt zu halten, und
Antriebsmittel (29,33), die mit den Eingangswellen (28) der Getriebe (22,23) gekoppelt sind.

2. Vorrichtung nach Anspruch 1, **dadurch gekennzeichnet, dass** der Wickelwelle (18) eine Federeinrichtung zugeordnet ist, durch die die Wickewelle (18) im Sinne des Aufwickelns der Bahn (8;56) vorgespannt ist.

3. Vorrichtung nach Anspruch 1, **dadurch gekennzeichnet, dass** das Winkelgetriebe (22,23) ein Schneckengetriebe ist, dessen Schneckenrad (26) mit der Ausgangswelle (32,33) drehfest verbunden ist.

4. Vorrichtung nach Anspruch 1, **dadurch gekennzeichnet, dass** das Winkelgetriebe (22,23) ein Schneckengetriebe ist, dessen Schnecke (27) mit der Eingangswelle (28) drehfest verbunden ist.

5. Vorrichtung nach Anspruch 1, **dadurch gekennzeichnet, dass** die Eingangswelle (28) des einen Winkelgetriebes (22) ein Antriebsende und ein Abtriebsende (37) aufweist, wobei mit dem Antriebsende ein Elektromotor (29) drehfest gekuppelt ist, und dass das andere Winkelgetriebe (23) wenigstens ein Antriebsende aufweist, das über eine Kuppelwelle (36) mit dem Abtriebsende (37) der Eingangswelle (28) des anderen Winkelgetriebes (23) gekuppelt ist.

6. Vorrichtung nach Anspruch 5, **dadurch gekennzeichnet, dass** die Kuppelwelle (36) eine biegsame Welle ist.

7. Vorrichtung nach Anspruch 1, **dadurch gekennzeichnet, dass** die Eingangswelle (28) jedes Winkelgetriebes (22,23) mit einem eigenen Elektromotor (29,33) gekuppelt ist.

8. Vorrichtung nach Anspruch 1, **dadurch gekennzeichnet, dass** jedes der Betätigungselemente von einem Kniehebel (41,46) gebildet ist, wobei sich jeder Kniehebel (41,46) aus zwei Kniehebelarmen (42,43) zusammensetzt, die über ein Kniehebelscharnier (44) miteinander verbunden sind.

9. Vorrichtung nach Anspruch 1, **dadurch gekennzeichnet, dass** jedes der Betätigungselemente von einem einarmigen Hebel (14,15;62) gebildet ist.

## Claims

1. Window blind or separator mesh (5; 51)
with a rotatably disposed winding shaft (18),
with a blind sheet (8; 56), which is fastened at one edge to the winding shaft (18) and the other edge of which is reinforced by a pull rod (13; 58),
**characterised by**
two angular gears (22, 23), which are arranged in the vicinity of the winding shaft (18) and each of which has an input shaft (28) and an output shaft (32, 34), wherein the input shafts (28) are oriented parallel to the winding shaft (18) and the output shafts (32, 34) are oriented at right angles to the winding shaft (18),
two operating elements (14, 15; 41, 46; 46; 62), which are connected at the ends to the pull rod (13; 58), of which one (14; 46; 62) is attached to one (34) of the two output shafts (32, 34) and the other (15; 41; 62) to the other (32) of the two output shafts (32, 34) to be fixed against rotation and against bending, and which serve to extend the blind sheet (8; 56) from the winding shaft (18) and to hold it opened out at least over a section of the path of extension, and drive elements (29, 33), which are coupled to the input shafts (28) of the gears (22, 23).

2. Device according to Claim 1, **characterised in that** the winding shaft (18) has an associated spring means, through which the winding shaft (18) is biased in the sense of winding up the blind sheet (8; 56).

3. Device according to Claim 1, **characterised in that** the angular gear (22, 23) is a worm gear, the worm. wheel (26) of which is connected to the output shaft (32, 33) to be fixed against rotation.

4. Device according to Claim 1, **characterised in that** the angular gear (22, 23) is a worm gear, the worm (27) of which is connected to the input shaft (28) to be fixed against rotation.

5. Device according to Claim 1, **characterised in that** the input shaft (28) of one angular gear (22) has a driving end and an output end (37), wherein an electric motor (29) is coupled against rotation to the driving end, and that the other angular gear (23) has at least one driving end, which is coupled to the output end (37) of the input shaft (28) of the other angular gear (23) via a coupling shaft (36).

6. Device according to Claim 5, **characterised in that** the coupling shaft (36) is a flexible shaft.

7. Device according to Claim 1, **characterised in that** the input shaft (28) of each angular gear (22, 23) is coupled to its own electric motor (29, 33).

8. Device according to Claim 1, **characterised in that** each of the operating elements is formed by a toggle joint (41, 46), wherein each toggle joint (41, 46) consists of two toggle joint arms (42, 43), which are connected to one another via a toggle joint hinge (44).

9. Device according to Claim 1, **characterised in that** each of the operating elements is formed by a single-arm lever (14, 15; 62).

## Revendications

1. Store à enrouleur de fenêtre ou grille de séparation (5 ; 51) avec une barre d'enroulement (18) montée rotative, avec une bande (8 ; 56) qui est fixée par un bord à la barre d'enroulement (18) et dont l'autre bord est rigidifié par une barre de traction (13 ; 58), **caractérisé par** deux transmissions d'angle (22, 23) qui sont implantées à proximité de la barre d'enroulement (18) et qui possèdent chacune un arbre d'entrée (28) et un arbre de sortie (32, 34), les arbres d'entrée (28) étant orientés parallèlement à la barre d'enroulement (18) et les arbres de sortie (32, 34) perpendiculairement à la barre d'enroulement (18), deux éléments d'actionnement (14, 15 ; 41, 46 ; 62) qui sont reliés par l'une de leur extrémités à la barre de traction (13 ; 58), qui sont montés solidaires en rotation et en flexion, le premier (14 ; 46 ; 62) sur l'un (34) des deux arbres de sortie (32, 34) et le second (15 ; 41 ; 62) sur l'autre (32) des deux arbres de sortie (32, 34) et qui servent à dérouler la bande (8 ; 56) de la barre d'enroulement (18) et à la maintenir tendue sur au moins une partie de la course de déroulement, et des moyens d'entraînement (29, 33) qui sont couplés aux arbres d'entrée (28) des transmissions (22, 23).

2. Dispositif selon la revendication 1, **caractérisé en ce que** la barre d'enroulement (18) est associée à un dispositif à ressort grâce auquel la barre d'enroulement (18) est précontrainte dans le sens de l'enroulement de la bande (8 ; 56).

3. Dispositif selon la revendication 1, **caractérisé en ce que** la transmission d'angle (22, 23) est une transmission à vis dont la roue dentée (26) est montée solidaire en rotation de l'arbre de sortie (32, 33).

4. Dispositif selon la revendication 1, **caractérisé en ce que** la transmission d'angle (22, 23) est une transmission à vis dont la crémaillère (27) est montée solidaire en rotation de l'arbre d'entrée (28).

5. Dispositif selon la revendication 1, **caractérisé en ce que** l'arbre d'entrée (28) de la première transmission d'angle (22) possède une extrémité menante et une extrémité menée (37), un moteur électrique (29) étant solidarisé en rotation avec l'extrémité menante, et **en ce que** l'autre transmission d'angle (23) possède au moins une extrémité menante qui est couplée par un arbre d'accouplement (36) avec l'extrémité menée (37) de l'arbre d'entrée (28) de l'autre transmission d'angle (23).

6. Dispositif selon la revendication 5, **caractérisé en ce que** l'arbre d'accouplement (36) est un arbre flexible.

7. Dispositif selon la revendication 1, **caractérisé en ce que** l'arbre d'entrée (28) de chaque transmission d'angle (22, 23) est couplé à son propre moteur électrique (29, 33) .

8. Dispositif selon la revendication 1, **caractérisé en ce que** chacun des éléments d'actionnement est formé d'un mécanisme à genouillère (41, 46), chaque mécanisme à genouillère (41, 46) étant composé de deux leviers de genouillère (42, 43) qui sont reliés ensemble par une articulation de genouillère (44).

9. Dispositif selon la revendication 1, **caractérisé en ce que** chacun des éléments d'actionnement est formé d'un levier à bras unique (14, 15 ; 62).
